# EUROPÄISCHE PATENTANMELDUNG

(11) **EP 4 116 347 A1**
(43) Veröffentlichungstag der Anmeldung: **11.01.2023**
(21) Anmeldenummer: 21184250.5
(22) Anmeldetag: 07.07.2021
(51) Int. Cl.: C08G 18/08, C08G 18/78, C08G 18/80, C09J 175/02, C09J 175/04

(54) **ZWEIKOMPONENTIGE POLYURETHANDISPERSIONSKLEBSTOFFE**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft zweikomponentige Polyurethandispersionsklebstoffe umfassend (I) mindestens eine wässrige Dispersion enthaltend ein amorphes Polyurethan-Polyharnstoff-Polymer und (II) mindestens ein hydrophil-modifiziertes, Silan- und Thioallophanatstrukturen aufweisendes Polyisocyanat als Vernetzerkomponente. Außerdem betrifft die Erfindung die Verwendung dieser zweikomponentigen Polyurethandispersionsklebstoffe zur Herstellung von Mehrschichtverbunden, insbesondere solchen, die aus einem synthetischen Substrat und einem Substrat mit metallischer Oberfläche bestehen, sowie die unter Verwendung der Klebstoffe erhältlichen Verbundmaterialien.

## Beschreibung

Die Erfindung betrifft zweikomponentige Polyurethandispersionsklebstoffe, enthaltend wässrige amorphe Polyurethan-Polyharnstoff-Dispersionen und hydrophil-modifizierte Silan- und Thioallophanatstrukturen aufweisende Polyisocyanate als Vernetzer, die Verwendung der Polyurethandispersionsklebstoffe zur Herstellung von Mehrschichtverbunden, insbesondere solchen, die aus einem synthetischen Substrat und einem Substrat mit metallischer Oberfläche bestehen, und die mit diesen Polyurethandispersionsklebstoffen verklebten Mehrschichtverbunde.

Polyurethandispersionsklebstoffe für die Herstellung von Mehrschichtverbunden sind bekannt.

DE 102005006235 offenbart wässrige Polyurethandispersionen, deren Polyurethanpolymer weniger als 0,6% Harnstoff enthält. Die Dispersionen werden 1-komponentig verarbeitet. Die Polyurethandispersionen werden für die Herstellung von Mehrschichtverbunden verwendet, die durch Kochen wieder in die einzelnen Folienlagen aufgetrennt werden können.

Für Mehrschichtverbunde, die während ihrer Gebrauchsphase hohen Temperaturen ausgesetzt sind, z.B. kochendem Wasser, werden beständigere Klebstoffpolymere benötigt. Das wird in der Regel durch die Mitverwendung von Vernetzern erreicht. Der Vernetzer wird als zweite Komponente unmittelbar vor der Verarbeitung der Polymerdispersion zugesetzt. Nach dem Abdampfen des Wassers reagieren die Moleküle des Vernetzers mit den vernetzerreaktiven Gruppen in der Polymerkette unter Ausbildung kovalenter Bindungen. Es entsteht ein dreidimensionales Netzwerk. Das vernetzte Polymer besitzt eine höhere Wärmebeständigkeit als das unvernetzte Polymer.

Die zweikomponentige Verarbeitung ist insbesondere bei Mehrschichtverbunden erforderlich, die während oder nach dem Abpacken von Lebensmittel einer hohen Temperatur ausgesetzt werden. Beispiele für solche Anwendungen sind z.B. verpackte Lebensmittel, die nach dem Verpacken in einem Autoklav mit Wasserdampf bei 121°C bzw. 134°C sterilisiert werden (siehe Verordnung (EU) Nr. 10/2011 der Kommission vom 14. Januar 2011 über Materialien und Gegenstände aus Kunststoff, die dazu bestimmt sind, mit Lebensmitteln in Berührung zu kommen). Während der Sterilisation dürfen sich die Folienlagen der Mehrschichtverbunde nicht trennen. Eine weitere anspruchsvolle Anwendung betrifft das Abfüllen von heißen Lebensmitteln in Mehrschichtverbunde (sog. hot-filling). Hier werden Lebensmittel mit bis zu 95°C in die Mehrschichtverbunde abgefüllt. Die Folienlagen müssen auch unter diesen Bedingungen ihre hohe Verbundfestigkeit behalten.

US 5 532 058 A beschreibt verbesserte Mehrschichtverbunde (flexible Laminate) bestehend aus thermoplastischen Folien und/oder Metallfolien, die kochendem Wasser ausgesetzt werden. Die Mehrschichtverbunde werden unter Verwendung von Polyurethandispersionen, denen unmittelbar vor der Verarbeitung zum Mehrschichtverbund ein Vernetzer zugegeben wird, hergestellt. Vernetzer nach dieser Erfindung sind Aziridine, Carbodiimide oder Epoxyde sowie Mischungen dieser Vernetzer.

EP 278 844 7 B1 beansprucht die Verwendung von wässrigen Polyurethandispersionen zur Verbundfolienkaschierung, wobei das Polyurethan zu mindestens 10 Gew.-% aufgebaut ist aus mindestens einem amorphen Polyesterpolyol, wobei die Polyurethandispersion mindestens einen externen Vernetzer enthält und es sich bei dem externen Vernetzer um ein Polyisocyanat mit mindestens zwei Isocyanatgruppen handelt. Die wässrigen Klebstoffdispersionen können auch für Mehrschichtverbunde mit Aluminiumfolie verwendet werden, die in sogenannten "hot-filling" Anwendungen zum Einsatz kommen.

Hydrophil-modifizierte Polyisocyanate, die Silangruppen im Molekül tragen, sind ebenfalls bekannt.

EP 0 872 499 A1 beschreibt wässrige zweikomponentige Bindemittelkombinationen auf Basis hydroxy- und/oder aminofunktioneller wasserverdünnbarer Harze sowie durch anteilige Umsetzung von Polyisocyanaten mit Aminoalkyl-alkoxysilanen erhaltene Isocyanat- und Alkoxysilylgruppen aufweisende Verbindungen als Vernetzer Diese Zweikomponenten-Systeme kommen als Bindemittel in Lacken, Beschichtungen und Dichtmassen zur Anwendung. Die Emulgierbarkeit der Isocyanat- und Alkoxysilylgruppen aufweisende Vernetzerkomponenten in dem wässrigen Bindemittel wird durch Abmischen mit einem hydrophil modifizierten Polyisocyanat erreicht.

EP 0 949 284 A1 offenbart hydrophil modifizierte Polyisocyanate mit einem definierten Gehalt an Isocyanat- und Alkoxysilangruppen, hergestellt durch Umsetzung von Polyisocyanaten mit sekundären Aminoalkylalkoxysilanen und hydrophilen nichtionischen oder ionischen Aufbaukomponenten, die es erlauben die so modifizierten Polyisocyanate stabil in Wasser zu dispergieren. Diese hydrophilen Alkoxysilan-modifizierten Polyisocyanate dienen als Vernetzerkomponenten für wässrige Dispersionen Isocyanat-reaktiver Polymere zur Herstellung von Beschichtungsmitteln, Klebstoffen oder Dichtstoffen

Gegenstand der EP 953 585 sind wasseremulgierbare Polyisocyanate, hergestellt durch Umsetzung hydrophober Polyisocyanate, vorzugsweise Polyisocyanuratpolyisocyanate, mit Mercaptosilanen als Kopplungsmittel und gegenüber NCO-Gruppen reaktiven nichtionischen Emulgatoren, die einen HLB-Wert von ≤ 17 aufweisen und im Durchschnitt 15 bis 35 Ethylenoxideinheiten pro Molekül enthalten, insbesondere auf Alkylphenolen gestarteten Polyetheralkoholen. Diese wasseremulgierbaren Polyisocyanate, die gegebenenfalls zusätzlich 3-Glycidoxypropyltrimethoxysilan enthalten können, dienen u. a. als Vernetzer für wässrige Klebstoffe.

EP 1 544 226 A1 beschreibt wässrige Zweikomponenten-Klebstoffe, bestehend aus Umsetzungsprodukten von Polyisocyanaten mit unterschüssigen Mengen alkoxysilanfunktioneller Asparaginsäureester und Polyalkylenoxidpolyetheralkoholen sowie als zweiter Komponente aus einem Katalysator und/oder einem wässrigen Bindemittel. Die Klebstoffe dienen insbesondere zur Verklebung von Canvas oder Kunststoffen mit Substraten, wie Holz, Metallen, vorzugsweise Eisen oder Aluminium, Kunststoffen, Papier, Canvas, Keramik, Stein, Glas oder Beton.

Zur Herstellung von Mehrschichtverbunden sehr hoher Wärmebeständigkeit und Verbundfestigkeit, wie sie beispielsweise für die Heißsterilisation verpackter Lebensmittel oder für das Abfüllen heißer Lebensmittel benötigt werden, sind die Zweikomponenten-Klebstoffe des Standes der Technik nicht oder nur sehr bedingt geeignet.

Wie jetzt überraschend gefunden wurde, lassen sich unter Verwendung spezieller hydrophil modifizierter Polyisocyanate, die Silan- und Thioallophanatstrukturen aufweisen, in Kombination mit wässrigen amorphen Polyurethan-Polyharnstoff-Dispersionen zweikomponentige Polyurethandispersionsklebstoffe für Mehrschichtverbunde mit wenigstens einer Metallfolie formulieren, deren Verbundhaftung unter den Bedingungen der Dampfsterilisation nicht nur erhalten bleibt sondern sich sogar deutlich verbessert.

Gegenstand der vorliegenden Erfindung sind zweikomponentige Polyurethandispersionsklebstoffe enthaltend
(I) mindestens eine wässrige Dispersion enthaltend ein amorphes Polyurethan-Polyharnstoff-Polymer und
(II) mindestens ein hydrophil-modifiziertes Silan- und Thioallophanatstrukturen aufweisendes Polyisocyanat als Vernetzerkomponente.

Gegenstand der Erfindung ist auch die Verwendung dieser zweikomponentigen Polyurethandispersionsklebstoffe zur Herstellung von Mehrschichtverbunden, insbesondere solchen, die aus einem synthetischen Substrat und einem Substrat mit metallischer Oberfläche bestehen, sowie die unter Verwendung der Klebstoffe erhältlichen Verbundmaterialien.

Geeignete wässrige Dispersionen (I) im Sinne der vorliegenden Erfindung sind Dispersionen von Polyurethan-Polyharnstoff-Polymeren in Wasser. Diese Polymere enthalten als Aufbaukomponenten
(A) wenigstens ein amorphes Polyesterpolyol mit einem Molekulargewicht von mindestens 500 g/mol,
(B) wenigstens eine Di- und/oder Polyisocyanatkomponente,
(C) wenigstens eine Verbindung ausgewählt aus der Gruppe bestehend aus einbis dreiwertigen Alkoholen, welche zusätzlich mindestens eine ionische Gruppe oder mindestens eine in eine ionische Gruppe überführbare Gruppe enthalten, Monoamino- und Diaminocarbonsäuren,
(D) gegebenenfalls wenigstens eine Verbindung ausgewählt aus der Gruppe bestehend aus Neutralisationsaminen und Ammoniak,
(E) gegebenenfalls wenigstens ein Diamin als Kettenverlängerungsmittel und
(F) gegebenenfalls sonstige isocyanatreaktive Verbindungen

Amorph in Sinne dieser Erfindung sind Feststoffe, deren Bausteine nicht in Kristallgittern angeordnet sind, d.h. nicht kristallin sind. Amorphe Polyester sind erfindungsgemäß insbesondere solche Polyester, welche bei einer DSC-Messung nach DIN 65467:1999-03 bei einer Aufheizrate von 20 K/min im Temperaturbereich von -30°C bis +100°C einen Schmelzpeak von < 5 J/g aufweisen.

Bevorzugt enthält das Polyurethan-Polyharnstoff-Polymer amorphe Polyesterpolyole (A) in einer Menge von mehr als 20 Gew.-%, vorzugsweise mehr als 40 Gew.-%, besonders bevorzugt mehr als 60 Gew.-%, bezogen auf das Polyurethan-Polyharnstoff-Polymer. Bevorzugt hat das amorphe Polyesterpolyol ein mittleres Molekulargewicht, das aus der OH-Zahl berechnet werden kann, von mindestens 500 g/mol. Besonders bevorzugt liegt das mittlere Molekulargewicht zwischen 1000 und 4000 g/mol, besonders bevorzugt zwischen 1700 und 2500 g/mol.

Vorzugsweise handelt es sich bei den amorphen Polyesterpolyolen (A) um amorphe Polyesterdiole (A), zu deren Herstellung mindestens eine aromatische Dicarbonsäure, vorzugsweise Isophtalsäure und/oder Terephthalsäure, besonders bevorzugt Isophthalsäure, verwendet wird.

In einer bevorzugten Ausführungsform wird zur Herstellung des amorphen Polyesterdiols (A) ein Gemisch von Carbonsäuren verwendet, bestehend aus mindestens einer aliphatischen Dicarbonsäure mit 3 bis 10, vorzugsweise 4 bis 8 C-Atomen und mindestens einer aromatischen Dicarbonsäure. Das Mischungsverhältnis von aliphatischen zu aromatischen Dicarbonsäuren beträgt dabei vorzugsweise von 0,5:1 bis 2:1. Ein bevorzugtes Dicarbonsäuregemisch ist ein Gemisch aus Adipinsäure und Isophthalsäure, insbesondere im Verhältnis von 0,5:1 bis 2:1 .

Zur Herstellung der Polyesterdiole (A) kommen als mehrwertige Alkohole z.B. Ethylenglykol, Propan-1,2-diol, Propan-1,3-diol, Butan-1,3-diol, Buten-1,4-diol, Butin-1,4-diol, Pentan-1,5-diol, Hexan-1,6-diol, Neopentylglykol, Bis-(hydroxymethyl)-cyclohexane wie 1,4-Bis-(hydroxymethyl)cyclohexan, 2-Methylpropan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, in welcher x für eine Zahl von 1 bis 20, bevorzugt eine gerade Zahl von 2 bis 20 steht. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Besonders bevorzugt sind Butan-1,4-diol, Hexan-1,6-diol und Neopentylglycol.

Geeignete Diisocyanate (B) zur Herstellung der Polyurethan-Polyharndispersionen (I) sind solche des Molekulargewichtsbereichs 140 bis 400 mit aliphatisch, cycloaliphatisch, araliphatisch und/oder aromatisch gebundenen Isocyanatgruppen, wie z. B. 1,4-Diisocyanatobutan, 1,5-Diisocyanatopentan (Pentamethylendiisocyanat, PDI), 1,6-Diisocyanatohexan (Hexamethylendiisocyanat, HDI), 2-Methyl-1,5-diisocyanatopentan, 1,5-Diisocyanato-2,2-dimethyl-pentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 2,4'- und 4,4'-Diisocyanatodicyclohexylmethan (H₁₂-MDI), 1-lsocyanato-1-methyl-4(3)isocyanato-methylcyclohexan, Bis-(isocyanatomethyl)-norbornan, 1,3- und 1,4-Bis(isocyanatomethyl)benzol (Xylylendiisocyanat, XDI), 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan (MDI), 1,5-Diisocyanatonaphthalin oder Mischungen aus mindestens zwei solcher Diisocyanate. Die Herstellung solcher Diisocyanate ist bekannt, sie können auf verschiedene Weise, beispielsweise durch Phosgenierung der korrespondierenden Diamine in der Flüssig- oder Gasphase oder auf phosgenfreien Weg, wie z. B. durch thermische Urethanspaltung, erhalten werden. Bevorzuge Diisocyanate sind PDI, HDI, IPDI, XDI und/oder TMXDI. Besonders bevorzugt ist die Verwendung von IPDI.

Neben diesen Diisocyanaten können bei der Herstellung der Polyurethan-Polyharnstoffdispersionen (I) gegebenenfalls anteilig auch höherfunktionelle Polyisocyanate als Komponente (B) mitverwendet werden. Solche höherfunktionellen Polyisocyanate sind beispielsweise die nach an sich bekannten Verfahren durch Modifizierung der genannten Diisocyanate erhältlichen Polyisocyanate mit Isocyanurat-, Iminooxadiazindion-, Allophanat-, Biuret-, Urethan-, Carbodiimid- und/oder Oxadiazintrionstruktur.

Falls überhaupt, werden als höherfunktionelle Polyisocyanate bevorzugt Isocyanuratstrukturen und/oder Biuretstrukturen aufweisende Polyisocyanate, besonders bevorzugt solche auf Basis von HDI, in geringem Umfang mitverwendet.

Geeignete Komponenten (C), welche zusätzlich mindestens eine ionische Gruppe oder mindestens eine in eine ionische Gruppe überführbare Gruppe enthalten, sind beispielsweise ein- bis dreiwertigen Alkohole, Monoamino- und Diaminocarbonsäuren.

Die ein- bis dreiwertigen Alkohole (C) enthalten insbesondere anionische Gruppen wie Sulfonat-, Carboxylat- und Phosphatgruppen. Der Begriff ionische Gruppe soll solche Gruppen mit umfassen, die in ionische Gruppen überführt werden können. Entsprechend werden auch die durch Neutralisation in ionische Gruppen überführbaren Carbonsäure-, Sulfonsäure- oder Phosphorsäuregruppen als ionische Gruppen aufgefasst.

Geeignete Sulfonat- oder Carboxylatgruppen enthaltende Komponenten C) sind z.B. Diaminoverbindungen bzw. Dihydroxyverbindungen, die zusätzlich Sulfonat- und/oder Carboxylatgruppen tragen, beispielsweise Natrium-, Lithium-, Kalium-, oder tert.-AmmoniumSalze der N-(2-Aminoethyl)-2-aminoethansulfonsäure, der N-(3-Aminopropyl)-2-aminoethansulfonsäure, der N-(3-Aminoproyl)-3-aminopropansulfonsäure, der N-(2-Aminoethyl)-3-aminopropansulfonsäure sowie der analogen Aminocarbonsäuren, der Dimethylolpropionsäure, der Dimethylolbuttersäure oder der Umsetzungsprodukte im Sinne einer Michaeladdition von 1 Mol Diamin, wie z.B. 1,2-Ethandiamin oder Isophorondiamin, mit 2 mol Acrylsäure oder Maleinsäure.

Bevorzugte Komponenten (C) sind Salze der N-(2-Aminoethyl)-2-aminoethansulfonsäure und Dimethylolpropionsäure.

Die Säuren (C) werden bevorzugt direkt in Ihrer Salzform als Sulfonat bzw. Carboxylat eingesetzt. Es ist jedoch auch möglich, die zur Salzbildung notwendigen Neutralisationsmittel (D) anteilig oder ganz erst während oder nach der Herstellung der Polyurethane zuzugeben.

Für die Salzbildung besonders geeignete Neutralisationsmittel (D) sind tert. Amine, wie z.B.

Triethylamin, Dimethylcyclohexylamin, Ethyldiisopropylamin.

Als Neutralisationsmittel (D) ebenfalls geeignet sind Ammoniak, Aminoalkohole, wie Diethanolamin, Triethanolamin, Dimethylethanolamin, Methydiethanolamin und Aminomethylpropanol, sowie beliebige Mischungen aus mindestens zwei Aminen der genannten Art.

Bei Verwendung von Ammoniak als Neutralisationsmittel (D) reagiert zunächst ein Teil des Ammoniaks mit den im Prepolymer vorhandenen NCO-Gruppen unter Addition und Kettenabbruch, der Rest dient als Neutralisationsamin. Durch vorherige Umsetzung des Prepolymers mit einem Diamin als Kettenverlängerungsmittel (E) kann bei Verwendung von Ammoniak die Zahl der verbleibenden NCO-Gruppen und somit das Verhältnis zwischen Kettenverlängerung und Kettenabbruch variiert werden. Dies ermöglicht eine Einstellung des Molekulargewichts des Polymers. Sinnvollerweise wird bei Verwendung von Ammoniak das Prepolymer zunächst mit dem Kettenverlängerungsmittel (E) umgesetzt und erst anschließend Ammoniak als Neutralisationsmittel (D) zugegeben.

Neben den genannten aminischen Verbindungen können als Neutralisationsmittel (D) für die Sulfonat- oder Carboxylatgruppen enthaltende Komponenten C) gegebenenfalls auch Alkali- oder Erdalkalihydroxide, wie z.B. Natrium-, Kalium-, Lithium und Calcium-Hydroxid, eingesetzt werden.

Als Kettenverlängerungsmittel (E) kommen bei der Herstellung der Polyurethan-Polyharnstoffdispersionen (I) gegebenenfalls beliebige Diamine, wie z. B. 1,2-Ethandiamin (Ethylendiamin), 1,5-Pentamethylendiamin, 1,6-Hexamethylendiamin, 1-Amino-3,3,5-trimethyl-5-aminomethyl-cyclohexan (Isophorondiamin), Piperazin, 1,4-Diaminocyclohexan und Bis-(4-aminocyclohexyl)-methan, Adipinsäuredihydrazid, Hydrazin bzw. Hydrazinhydrat, sowie beliebige Mischungen aus mindestens zwei Diaminen, insbesondere solchen der genannten Art zum Einsatz.

Bevorzugte Kettenverlängerungsmittel (E) sind Ethylendiamin und Isophorondiamin. Ganz besonders bevorzugt ist Ethylendiamin.

In einer ganz besonders bevorzugten Ausführungsform der vorliegenden Erfindung wird bei der Herstellung der Polyurethan-Polyharnstoffdispersionen (I) Ethylendiamin als Kettenverlängerungsmittel (E) und Ammoniak als Neutralisationsmittel (D) verwendet.

Als sonstige isocyanatreaktive Verbindungen (F) kommen prinzipiell alle von (A) bis (E) verschiedenen, gegenüber Isocyanat reaktiven Verbindungen in Frage, wie z. B. Diole eines Molekulargewichts von 62 bis 499 g/mol, kristalline Polyesterdiole, Polymerdiole auf Basis von Polyethern, Polylactonen oder Polycarbonaten, Monoalkohole oder Mono- und Polyamine.

Zur Herstellung der in den erfindungsgemäßen Polyurethandispersionklebstoffen enthaltenen wässrigen Dispersonen (I) können sämtliche aus dem Stand der Technik bekannte Verfahren wie Emulgator-Scherkraft-, Aceton-, Prepolymer-Misch-, Schmelz-Emulgier-, Ketimin- und Feststoff-Spontan-Dispergierverfahren oder Abkömmlinge davon verwendet werden. Eine Zusammenfassung dieser Methoden findet sich in Methoden der organischen Chemie (Houben-Weyl, Erweiterungs- und Folgebände zur4. Auflage, Band E20, H. Bartl und J. Falbe, Stuttgart, New York, Thieme 1987, S. 1671-1682). Bevorzugt sind das Schmelz-Emulgier-, Prepolymer-Misch- und das Acetonverfahren. Besonders bevorzugt ist das Acetonverfahren. Die Anwendung und Durchführung des Acetonverfahrens ist Stand der Technik und dem Fachmann z.B. aus der EP 0 232 778 bekannt.

Die erfindungsgemäßen zweikomponentigen Polyurethandispersionsklebstoffe enthalten als Vernetzerkomponente (II) mindestens ein hydrophil-modifiziertes Silan- und Thioallophanatstrukturen aufweisendes Polyisocyanat, welches vorzugsweise aus mindestens einem Silan- und Thioallophanatstrukturen aufweisenden Polyisocyanat (G) sowie mindestens einem ionischen und/oder nichtionischen Emulgator (N) besteht.

Silangruppen enthaltende Thioallophanatpolyisocyanate (G) sind bekannt und beispielsweise in WO 2015/189164 beschrieben. Es handelt sich dabei insbesondere um solche der allgemeinen Formel (III) 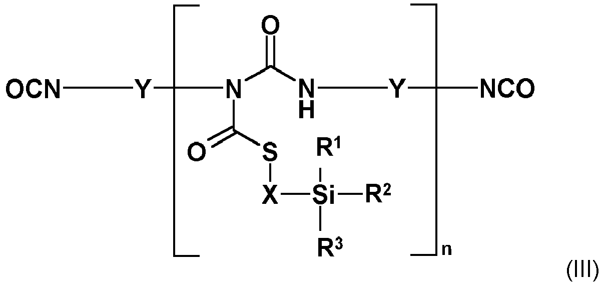 in welcher
- R¹, R² und R³: für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
- X: für einen linearen oder verzweigten organischen Rest mit mindestens 2 Kohlenstoffatomen steht,
- Y: einen linearen oder verzweigten, aliphatischen oder cycloaliphatischen, einen araliphatischen oder aromatischen Rest mit bis zu 18 Kohlenstoffatomen bedeutet und
- n: für eine ganze Zahl von 1 bis 20 steht.

Die Herstellung solcher Silangruppen enthaltenden Thioallophanate ist ebenfalls bekannt und nicht Gegenstand dieser Anmeldung. Sie erfolgt durch Umsetzung
(K) mindestens eines monomeren Diisocyanates der allgemeinen Formel (IV)

   OCN-Y-NCO (IV),

   in welcher Y einen linearen oder verzweigten, aliphatischen oder cycloaliphatischen, einen araliphatischen oder aromatischen Rest mit bis zu 18 Kohlenstoffatomen bedeutet, mit
(L) Mercaptosilanen der allgemeinen Formel (V) 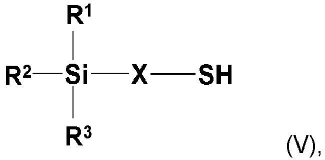 in welcher
   R¹, R², R³ und X die oben genannte Bedeutung haben,
   in einem Äquivalentverhältnis von Isocyanatgruppen zu Mercaptogruppen von 2 : 1 bis 40 : 1.

Als Ausgangsverbindungen (K) für das erfindungsgemäße Verfahren sind beliebige Diisocyanate mit aliphatisch, cycloaliphatisch, araliphatisch und/oder aromatisch gebundenen Isocyanatgruppen geeignet, die nach beliebigen Verfahren, z. B. durch Phosgenierung oder auf phosgenfreiem Weg, beispielsweise durch Urethanspaltung, hergestellt werden können.

Geeignete Diisocyanate sind beispielsweise solche der allgemeinen Formel (IV)

OCN-Y-NCO (IV),

in welcher Y für einen linearen oder verzweigten, aliphatischen oder cycloaliphatischen Rest mit bis zu 18 Kohlenstoffatomen, bevorzugt 4 bis 18 Kohlenstoffatomen oder einen gegebenenfalls substituierten aromatischen oder araliphatischen Rest mit bis zu 18 Kohlenstoffatomen, bevorzugt 6 bis 18 Kohlenstoffatomen steht, wie z. B. 1,4-Diisocyanatobutan, 1,5-Diisocyanatopentan, 1,6-Diisocyanatohexan (HDI), 1,5-Diisocyanato-2,2-dimethylpentan, 2,2,4- bzw. 2,4,4-Trimethyl-1,6-diisocyanatohexan, 1,8-Diisocyanatooctan, 1,9-Diisocyanatononan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethylcyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H₁₂-MDI), 1,3- und 1,4-Bis(isocyanatomethyl)cyclohexan, 4,4'-Diisocyanato-3,3'-dimethyldicyclohexylmethan, 4,4' Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1,3- und 1,4-Bis-(isocyanatomethyl)benzol (Xylylendiisocyanat, XDI), 1,3- und 1,4-Bis(1-isocyanato-1-methylethyl)-benzol (TMXDI), Bis(4-(1-isocyanato-1-methylethyl)phenyl)-carbonat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat sowie beliebige Gemische solcher Diisocyanate. Weitere ebenfalls geeignete Diisocyanate finden sich darüber hinaus beispielsweise in Justus Liebigs Annalen der Chemie Band 562 (1949) S. 75 - 136.

Als Ausgangskomponente (K) besonders bevorzugt sind Diisocyanate der allgemeinen Formel (IV), in welcher Y für einen linearen oder verzweigten, aliphatischen oder cycloaliphatischen Rest mit 5 bis 13 Kohlenstoffatomen steht.

Ganz besonders bevorzugte Ausgangskomponenten (K) sind 1,5-Diisocyanatopentan, 1,6-Diisocyanatohexan, 1-Isocyanato-3,3,5-trimethyl-5-isocyanatomethylcyclohexan, 2,4'- und/oder 4,4'-Diisocyanatodicyclohexylmethan oder beliebige Gemische dieser Diisocyanate.

Ausgangskomponenten (L) zur Herstellung der Silan- und Thioallophanatstrukturen aufweisenden Polyisocyanate (G) sind beliebige Mercaptosilane der allgemeinen Formel (V) 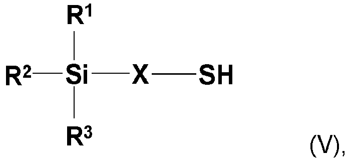 in welcher
- R¹, R² und R³: für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann, und
- X: für einen linearen oder verzweigten organischen Rest mit mindestens 2 Kohlenstoffatomen steht.

Geeignete Mercaptosilane (L) sind beispielsweise 2-Mercaptoethyltrimethylsilan, 2-Mercaptoethylmethyldimethoxysilan, 2-Mercaptoethyltrimethoxysilan, 2-Mercaptoethyltriethoxysilan, 3-Mercaptopropylmethyldimethoxysilan, 3-Mercaptopropyldimethylmethoxysilan, 3-Mercaptopropyltrimethoxysilan, 3-Mercaptopropylmethyldiethoxysilan, 3-Mercaptopropyltriethoxysilan, 3-Mercaptopropylethyldimethoxysilan, 3-Mercaptopropylethyldiethoxysilan und/oder 4-Mercaptobutyltrimethoxysilan.

Bevorzugte Mercaptosilane (L) zur Herstellung der Silan- und Thioallophanatstrukturen aufweisenden Polyisocyanate (G) sind solche der allgemeinen Formel (V), in welcher
- R¹, R² und R³: für gleiche oder verschiedene Reste stehen und jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann, und
- X: für einen linearen oder verzweigten Alkylenrest mit 2 bis 10 Kohlenstoffatomen steht.

Besonders bevorzugte Mercaptosilane (L) sind solche der allgemeinen Formel (V), in welcher
- R¹, R² und R³: jeweils Alkylreste mit bis zu 6 Kohlenstoffatomen und/oder Alkoxyreste, die bis zu 3 Sauerstoffatomen enthalten, bedeuten, mit der Maßgabe, daß mindestens einer der Reste R¹, R² und R³ für einen solchen Alkoxyrest steht, und
- X: für einen Propylenrest (-CH₂-CH₂-CH₂-) steht.

Ganz besonders bevorzugte Mercaptosilane (L) sind solche der allgemeinen Formel (V), in welcher
- R¹, R² und R³: für gleiche oder verschiedene Reste stehen und jeweils Methyl, Methoxy oder Ethoxy bedeuten, mit der Maßgabe, daß mindestens einer der Reste R¹, R² und R³ für einen Methoxy- oder Ethoxyrest steht, und
- X: für einen Propylenrest (-CH₂-CH₂-CH₂-) steht.

Zur Herstellung der Silan- und Thioallophanatstrukturen aufweisenden Polyisocyanate (G) werden die Diisocyanate (M) mit den Mercaptosilanen (L) bei Temperaturen von 20 bis 200 °C, vorzugsweise 40 bis 160 °C, unter Einhaltung eines Äquivalentverhältnis von Isocyanatgruppen zu Mercaptogruppen von 2 : 1 bis 40 : 1, vorzugsweise von 4 : 1 bis 30 : 1, besonders bevorzugt 6 : 1 bis 20 : 1, zu Thioallophanaten umgesetzt.

Dies kann unkatalysiert als thermisch induzierte Thioallophanatisierung durchgeführt werden. Bevorzugt kommen zur Beschleunigung der Thioallophanatisierungsreaktion aber geeignete Katalysatoren zum Einsatz. Hierbei handelt es sich um die üblichen bekannten Allophanatisierungskatalysatoren, beispielsweise um Metallcarboxylate, Metallchelate oder tertiäre Amine der in der GB-A-0 994 890 beschriebenen Art, um Alkylierungsmittel der in der US-A-3 769 318 beschriebenen Art oder um starke Säuren, wie sie in der EP-A-0 000 194 beispielhaft beschrieben sind.

Geeignete Allophanatisierungskatalysatoren sind insbesondere Zinkverbindungen, wie z. B. Zink-(II)-stearat, Zink-(II)-n-octanoat, Zink-(II)-2-ethyl-1-hexanoat, Zink-(II)-naphthenat oder Zink-(II)-acetylacetonat, Zinnverbindungen, wie z. B. Zinn-(II)-n-octanoat, Zinn-(II)-2-ethyl-1-hexanoat, Zinn-(II)-laurat, Dibutylzinnoxid, Dibutylzinndichlorid, Dibutylzinndiacetat, Dibutylzinndilaurat, Dibutylzinndimaleat oder Dioctylzinndiacetat, Zirconiumverbindungen, wie z. B. Zirconium-(IV)-2-ethyl-1-hexanoat, Zirconium-(IV)-neodecanoat, Zirconium-(IV)-naphthenat oder Zirconium-(IV)-acetylacetonat, Aluminium-tri(ethylaceto-acetat), Eisen-(III)-chlorid, Kaliumoctoat, Mangan- Cobalt- oder Nickelverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

Geeignete, wenngleich weniger bevorzugte Katalysatoren zur Herstellung der Silan- und Thioallophanatstrukturen aufweisenden Polyisocyanate (G) sind auch solche Verbindungen, die neben der Allophanatisierungsreaktion auch die Trimerisierung von Isocyanatgruppen unter Bildung von Isocyanuratstrukturen katalysieren. Solche Katalysatoren sind beispielsweise in der EP-A-0 649 866 Seite 4, Zeile 7 bis Seite 5, Zeile 15 beschrieben.

Bevorzugte Katalysatoren zur Herstellung der Silan- und Thioallophanatstrukturen aufweisenden Polyisocyanate (G) sind Zink- und/oder Zirconiumverbindungen der obengenannten Art. Ganz besonders bevorzugt ist die Verwendung Zink-(II)-n-octanoat, Zink-(II)-2-ethyl-1-hexanoat und/oder Zink-(II)-stearat, Zirconium-(IV)-n-octanoat, Zirconium-(IV)-2-ethyl-1-hexanoat und/oder Zirconium-(IV)-neodecanoat.

Diese Katalysatoren kommen, falls überhaupt, in einer Menge von 0,001 bis 5 Gew.-%, vorzugsweise 0,005 bis 1 Gew.-%, bezogen auf das Gesamtgewicht der Reaktionspartner (M) und (L) zum Einsatz und können sowohl vor Reaktionsbeginn als auch zu jedem Zeitpunkt der Reaktion zugesetzt werden.

Die Thioallophanatisierung wird vorzugsweise lösemittelfrei durchgeführt. Gegebenenfalls können aber auch geeignete, gegenüber den reaktiven Gruppen der Ausgangskomponenten inerte Lösemittel mitverwendet werden. Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®} (Deutsche EXXON CHEMICAL GmbH, Köln, DE) und Shellsol^{®} (Deutsche Shell Chemie GmbH, Eschborn, DE) im Handel sind, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

Die Herstellung der Silan- und Thioallophanatstrukturen aufweisenden Polyisocyanate (G) kann in einer möglichen Ausführungsform so erfolgen, dass das Ausgangsdiisocyanat (M) bzw. eine Mischung verschiedener Ausgangsdiisocyanate gegebenenfalls unter Inertgas, wie beispielsweise Stickstoff, und gegebenenfalls in Gegenwart eines geeigneten Lösungsmittels der genannten Art bei einer Temperatur zwischen 20 und 100°C vorgelegt wird. Anschließend wird das Mercaptosilan (L) bzw. eine Mischung verschiedener Mercaptosilane in der oben angegebenen Menge zugegeben und die Reaktionstemperatur für die Thiourethanisierung gegebenenfalls durch eine geeignete Maßnahme (Heizen oder Kühlen) auf eine Temperatur von 30 bis 120°C, vorzugsweise von 50 bis 100°C eingestellt. Im Anschluss an die Thiourethanisierungsreaktion, d. h. wenn der einem vollständigen Umsatz von Isocyanat- und Mercaptogruppen theoretisch entsprechende NCO-Gehalt erreicht ist, kann die Thioallophanatisierung beispielsweise ohne Zusatz eines Katalysators durch Erhitzen des Reaktionsgemisches auf eine Temperatur von 120 bis 200°C gestartet werden. Vorzugsweise kommen zur Beschleunigung der Thioallophanatisierungsreaktion jedoch geeignete Katalysatoren der obengenannten Art zum Einsatz, wobei in Abhängigkeit von der Art und Menge des eingesetzten Katalysators Temperaturen im Bereich von 60 bis 140°C, vorzugsweise 70 bis 120°C, zur Durchführung der Reaktion ausreichend sind.

In einer anderen möglichen Ausführungsform der Herstellung der Silan- und Thioallophanatstrukturen aufweisenden Polyisocyanate (G) wird der gegebenenfalls mitzuverwendenden Katalysator entweder der Diisocyanatkomponente (M) und/oder der Silankomponente (L) bereits vor Beginn der eigentlichen Umsetzung zugemischt. In diesem Fall reagieren die sich intermediär bildenden Thiourethangruppen spontan weiter zur gewünschten Thioallophanatstruktur. Bei dieser Art der einstufigen Reaktionsführung werden die gegebenenfalls den Katalysator enthaltenden Ausgangsdiisocyanate (M) gegebenenfalls unter Inertgas, wie beispielsweise Stickstoff, und gegebenenfalls in Gegenwart eines geeigneten Lösungsmittels der genannten Art, in der Regel bei für die Thioallophanatisierung optimalen Temperaturen im Bereich von 60 bis 140°C, vorzugsweise 70 bis 120°C, vorgelegt und mit der gegebenenfalls den Katalysator enthaltenden Silankomponente (L) zur Reaktion gebracht.

Es ist aber auch möglich, den Katalysator dem Reaktionsgemisch zu einem beliebigen Zeitpunkt während der Thiourethanisierungsreaktion zuzusetzen. Bei dieser Ausführungsform der Herstellung der Silan- und Thioallophanatstrukturen aufweisenden Polyisocyanate (G) wird für die vor der Katalysatorzugabe ablaufende reine Thiourethanisierungsreaktion in der Regel eine Temperatur im Bereich von 30 bis 120°C, vorzugsweise von 50 bis 100°C, eingestellt. Nach Zugabe eines geeigneten Katalysators wird die Thioallophantisierungreaktion schließlich bei Temperaturen von 60 bis 140°C, vorzugsweise von 70 bis 120°C, durchgeführt.

Der Verlauf der Umsetzung kann bei der Herstellung der Silan- und Thioallophanatstrukturen aufweisenden Polyisocyanate (G) durch z. B. titrimetrische Bestimmung des NCO-Gehaltes verfolgt werden. Nach Erreichen des angestrebten NCO-Gehaltes, vorzugsweise wenn der Thioallophanatisierungsgrad (d. h. der aus dem NCO-Gehalt errechenbare prozentuale Anteil der zu Thioallophanatgruppen umgesetzten, aus den Mercaptogruppen der Komponente (L) sich intermediär bildenden Thiourethangruppen) des Reaktionsgemisches mindestens 70 %, besonders bevorzugt mindestens 90 % beträgt, ganz besonders bevorzugt nach vollständiger Thioallophanatisierung, wird die Reaktion abgebrochen. Dies kann bei rein thermischer Reaktionsführung beispielsweise durch Abkühlen des Reaktionsgemisches auf Raumtemperatur erfolgen. Bei der bevorzugten Mitverwendung eines Thioallophanatisierungskatalysators der genannten Art wird die Umsetzung im allgemeinen aber durch Zugabe geeigneter Katalysatorgifte, beispielsweise Säurechloride wie Benzoylchlorid oder Isophthaloyldichlorid, abgestoppt.

Vorzugsweise wird das Reaktionsgemisch anschließend durch Dünnschichtdestillation im Hochvakuum, beispielsweise bei einem Druck von unter 1,0 mbar, vorzugsweise unter 0,5 mbar, besonders bevorzugt unter 0,2 mbar, unter möglichst schonenden Bedingungen, beispielsweise bei einer Temperatur von 100 bis 200 °C, vorzugsweise von 120 bis 180 °C, von flüchtigen Bestandteilen (überschüssigen monomeren Diisocyanaten, gegebenenfalls mitverwendeten Lösungsmitteln und, bei Verzicht auf den Einsatz eines Katalysatorgiftes, gegebenenfalls aktivem Katalysator) befreit.

Die anfallenden Destillate, die neben den nicht umgesetzten monomeren Ausgangsdiisocyanaten, gegebenenfalls mitverwendete Lösungsmittel bei Verzicht auf den Einsatz eines Katalysatorgiftes gegebenenfalls aktiven Katalysator enthalten, können problemlos zur erneuten Oligomerisierung verwendet werden.

In einer weiteren Ausführungsform der Herstellung der Silan- und Thioallophanatstrukturen aufweisenden Polyisocyanate (G) werden die genannten flüchtigen Bestandteile durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan vom Oligomerisierungsprodukt abgetrennt.

Unabhängig von der Art der Aufarbeitung erhält man als Produkte klare, praktisch farblose Silan- und Thioallophanatstrukturen aufweisenden Polyisocyanate (G), die in der Regel Farbzahlen von unter 120 APHA, vorzugsweise von unter 80 APHA, besonders bevorzugt von unter 60 APHA, und einen NCO-Gehalt von 2,0 bis 18,0 Gew.-%, vorzugsweise 7,0 bis 17,0 Gew.-%, besonders bevorzugt 10,0 bis 16,0 Gew.-%, aufweisen. Dabei beträgt die mittlere NCO-Funktionalität in Abhängigkeit vom Umsatzgrad und verwendetem Thioallophanatisierungskatalysator in der Regel von 1,8 bis 3,0, vorzugsweise von 1,8 bis 2,5, besonders bevorzugt von 1,9 bis 2,0,

Die hydrophil-modifizierten Silan- und Thioallophanatstrukturen aufweisenden Polyisocyanate (II) enthalten neben der Polyisocyanatkomponente (G) mindestens einen ionischen und/oder nichtionischen Emulgator (N).

Hierbei handelt es sich um beliebige grenzflächenaktive Stoffe, die aufgrund ihrer Molekülstruktur in der Lage sind, Polyisocyanate bzw. Polyisocyanatzusammensetzung in wässrigen Emulsionen über einen längeren Zeitraum, bevorzugt bis zu 8 Stunden, zu stabilisieren.

Die Herstellung der hydrophil-modifizierten Silan- und Thioallophanatstrukturen aufweisenden Polyisocyanate (II) erfolgt derart, dass die Silan- und Thioallophanatstrukturen aufweisenden Polyisocyanate (G) mit der Emulgatorkomponente (N) vermischt werden oder dass die Emulgatorkomponente (N) durch anteilige Umsetzung von Polyisocyanatenmolekülen der Polyisocyanatkomponente (G) mit ionischen und/oder nichtionischen Verbindungen, die gegenüber Isocyanatgruppen reaktive Gruppen tragen, in der Polyisocyanatkomponente (G) gebildet wird.

Eine bevorzugte Art nichtionischer Emulgatoren (N) stellen beispielsweise Umsetzungsprodukte (N1) der Silan- und Thioallophanatstrukturen aufweisenden Polyisocyanate (G) mit hydrophilen Polyetheralkoholen dar.

Geeignete hydrophile Polyetheralkohole sind ein- oder mehrwertige, im statistischen Mittel 5 bis 50 Ethylenoxideinheiten pro Molekül aufweisende Polyalkylenoxidpolyetheralkohole, wie sie in an sich bekannter Weise durch Alkoxylierung geeigneter Startermoleküle zugänglich sind (siehe z. B. Ullmanns Encyclopädie der technischen Chemie, 4. Auflage, Band 19, Verlag Chemie, Weinheim S. 31 - 38). Solche Startermoleküle können beispielsweise beliebige ein- oder mehrwertige Alkohole des Molekulargewichtsbereiches 32 bis 300 sein, wie z. B. Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n Tetradecanol, n-Hexadecanol, n-Octadecanol, Cyclohexanol, die isomeren Methyl-cyclohexanole, Hydroxymethylcyclohexan, 3-Methyl-3-hydroxymethyloxetan, Benzylalkohol, Phenol, die isomeren Kresole, Octylphenole, Nonylphenole und Naphthole, Furfurylalkohol, Tetrahydrofurfurylalkohol, 1,2-Ethandiol, 1,2- und 1,3-Propandiol, die isomeren Butandiole, Pentandiole, Hexandiole, Heptandiole und Octandiole, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können. Geeignete Polyetheralkohole sind entweder reine Polyethylenoxidpolyetheralkohole oder gemischte Polyalkylenoxidpolyether, deren Alkylenoxideinheiten zu mindestens 70 mol-%, vorzugsweise zu mindestens 80 mol-% aus Ethylenoxideinheiten bestehen.

Bevorzugte Polyalkylenoxidpolyetheralkohole sind solche, die unter Verwendung der oben genannten Monoalkohole des Molekulargewichtsbereiches 32 bis 150 als Startermoleküle hergestellt wurden. Besonders bevorzugte Polyetheralkohole sind reine Polyethylenglycolmonomethyletheralkohole, die im statistischen Mittel 5 bis 50, ganz besonders bevorzugt 5 bis 25 Ethylenoxideinheiten aufweisen.

Die Herstellung solcher bevorzugter nichtionischer Emulgatoren (N1) ist prinzipiell bekannt und beispielsweise in EP-B 0 206 059 und EP-B 0 540 985 beschrieben.

Sie kann durch Umsetzung der Silan- und Thioallophanatstrukturen aufweisenden Polyisocyanate (G) mit den genannten Polyetheralkoholen entweder in einem separaten Reaktionsschritt mit anschließendem Vermischen des erhaltenen Emulgators (N1) mit den in eine hydrophile Form zu überführenden Polyisocyanatkomponenten (G) oder aber in der Weise erfolgen, dass man die Polyisocyanatkomponenten (G) mit einer entsprechenden Menge der Polyetheralkohole abmischt, wobei sich spontan ein erfindungsgemäßes hydrophiles Polyisocyanatgemisch bildet, das neben nicht umgesetztem Silan- und Thioallophanatstrukturen aufweisendem Polyisocyanat (G) den sich in situ aus dem Polyetheralkohol und einem Teil der Komponente (G) bildenden Emulgator (N) enthält.

Die Herstellung dieser Art nichtionischer Emulgatoren (N1) erfolgt im allgemeinen bei Temperaturen von 40 bis 180 °C, vorzugsweise 50 bis 150 °C, unter Einhaltung eines NCO/OH-Äquivalent-Verhältnisses von 2:1 bis 400:1, vorzugsweise von 4:1 bis 140:1.

Bei der erstgenannten Variante der separaten Herstellung der nichtionischen Emulgatoren (N1) werden diese vorzugsweise unter Einhaltung eines NCO/OH-Äquivalentverhältnisses von 2 : 1 bis 6 : 1 hergestellt. Bei der in situ-Herstellung der Emulgatoren (N1) kann selbstverständlich ein hoher Überschuss an Isocyanatgruppen innerhalb des oben genannten breiten Bereichs zur Anwendung gelangen.

Die Reaktion der Silan- und Thioallophanatstrukturen aufweisenden Polyisocyanate (G) mit den genannten hydrophilen Polyetheralkoholen zu nichtionischen Emulgatoren (N1) kann nach dem in EP-B 0 959 087 beschriebenen Verfahren auch so geführt werden, dass die durch NCO/OH-Reaktion primär gebildeten Urethangruppen zumindest anteilig, vorzugsweise zu mindestens 60 mol-%, zu Allophanatgruppen, bezogen auf die Summe aus Urethan- und Allophanatgruppen, weiter umgesetzt werden. In diesem Fall werden Reaktionspartner im oben genannten NCO/OH-Äquivalentverhältnis bei Temperaturen von 40 bis 180 °C, vorzugsweise 50 bis 150 °C, in der Regel in Gegenwart der in den zitierten Patentschriften angeführten, zur Beschleunigung der Allophanatisierungsreaktion geeigneten Katalysatoren, insbesondere Zinkverbindungen, wie z. B. Zink-(II)-n-octanoat, Zink (II)-2-ethyl-1-hexanoat oder Zink-(II)-stearat, zur Reaktion gebracht.

Ein weiterer bevorzugter Typ geeigneter nichtionischer Emulgatoren (N) stellen beispielsweise auch Umsetzungsprodukte von monomeren Diisocyanaten oder Diisocyanatgemischen mit den oben genannten ein- oder mehrwertigen hydrophilen Polyetheralkoholen in einem OH/NCO-Äquivalentverhältnis von 0,6 : 1 bis 1,2 : 1 dar. Insbesondere bevorzugt ist die Umsetzung von monomeren Diisocyanaten oder Diisocyanatgemischen mit reinen Polyethylenglycolmonomethyletheralkoholen, die im statistischen Mittel 5 bis 50, bevorzugt 5 bis 25 Ethylenoxideinheiten aufweisen. Die Herstellung solcher Emulgatoren (N2) ist ebenfalls bekannt und beispielsweise in EP-B 0 486 881 beschrieben.

Gegebenenfalls können die Emulgatoren (N2) aber auch im Anschluss an das Abmischen der Komponenten in den vorstehend beschriebenen Mengenverhältnissen in Gegenwart geeigneter Katalysatoren mit den Silan- und Thioallophanatstrukturen aufweisenden Polyisocyanaten (G) unter Allophanatisierung umgesetzt werden. Dabei entstehen ebenfalls hydrophile Polyisocyanatzusammensetzung, die neben nicht umgesetztem Polyisocyanat (G) einen sich in situ aus dem Emulgator (N2) und einem Teil der Komponente (G) bildenden weiteren nichtionischen Emulgatortyp (N3) mit Allophanatstruktur enthalten. Auch die in situ-Herstellung solcher Emulgatoren (N3) ist bereits bekannt und beispielsweise in WO 2005/047357 beschrieben.

Die hydrophil-modifizierten Silan- und Thioallophanatstrukturen aufweisenden Polyisocyanate (II) können anstelle der beispielhaft beschriebenen nichtionischen Emulgatoren auch Emulgatoren mit ionischen, insbesondere anionischen Gruppen enthalten.

Bei diesen ionischen Emulgatorkomponenten (N) handelt es sich insbesondere um Umsetzungsprodukte aus mindestens einem Polyisocyanatmolekül der Silan- und Thioallophanatstrukturen aufweisenden Polyisocyanate (G) mit einer Aminosulfonsäure.

Solche ionischen Emulgatoren (N) stellen bevorzugt sulfonatgruppenhaltige Emulgatoren (N4) dar, wie sie beispielsweise nach dem Verfahren der WO 01/88006 durch Umsetzung der Polyisocyanatkomponenten (G) mit 2-(Cyclohexylamino)-ethansulfonsäure und/oder 3-(Cyclohexylamino)-propansulfonsäure oder auch mit 4-(Cyclohexylamino)-butansulfonsäure erhältlich sind. Diese Umsetzung findet in der Regel bei Temperaturen von 40 bis 150 °C, vorzugsweise 50 bis 130 °C, unter Einhaltung eines Äquivalent-Verhältnisses von NCO-Grup¬pen zu Aminogruppen von 2:1 bis 400:1, vorzugsweise von 4:1 bis 250:1, statt, wobei zur Neutralisation der Sulfonsäuregruppen tertiäre Amine, vorzugsweise in äquimolarer Menge bezogen auf die Menge an Aminosulfonsäure, mitverwendet werden. Geeignete Neutralisationsamine sind beispielsweise tertiäre Monoamine, wie z. B. Trimethylamin, Triethylamin, Tripropylamin, Tributylamin, Dimethylcyclohexylamin, Diisopropylethylamin, N-Methylmorpholin, N-Ethylmorpholin, N-Methylpiperidin, oder N-Ethylpiperidin, tertiäre Diamine, wie z. B. 1,3-Bis-(dimethylamino)-propan, 1,4-Bis-(dimethylamino)-butan oder N,N'-Dimethylpiperazin, oder, allerdings weniger bevorzugt, Alkanolamine, wie z. B. Dimethylethanolamin, Methyldiethanolamin oder Triethanolamin.

Wie bereits für die nichtionischen Emulgatoren (N1) beschrieben, kann auch die Umsetzung der Silan- und Thioallophanatstrukturen aufweisenden Polyisocyanate (G) mit den genannten Aminosulfonsäuren entweder in einem separaten Reaktionsschritt mit anschließendem Vermischen der erhaltenen ionischen Emulgatoren (N4) mit den in eine hydrophile Form zu überführenden Polyisocyanatkomponenten (G) oder aber in situ in diesen Polyisocyanatkomponenten erfolgen, wobei sich direkt ein hydrophil-modifiziertes Silan- und Thioallophanatstrukturen aufweisendes Polyisocyanat (II) bildet, das neben nicht umgesetztem Polyisocyanat (G) den sich in situ aus den Aminosulfonsäuren, dem Neutralisationsamin und einem Teil der Komponenten (G) bildenden Emulgator (N4) enthält.

Ein weiterer bevorzugter Typ geeigneter Emulgatoren (N) sind solche, die in einem Molekül gleichzeitig ionische und nichtionische Strukturen enthalten. Bei diesen Emulgatoren (N5) handelt es sich z. B. um mit tertiären Aminen, wie z. B. den oben genannten Neutralisationsaminen neutralisierte Alkylphenolpolyglykoletherphosphate und -phosphonate oder Fettalkoholpolyglykoletherphosphate und -phosphonate, wie sie beispielsweise in WO 97/31960 zur Hydrophilierung von Polyisocyanaten beschrieben sind, oder auch um mit solchen tertiären Aminen neutralisierte Alkylphenolpolyglykolethersulfate oder Fettalkoholpolyglykolethersulfate.

Bevorzugt enthält die Emulgatorkomponente in diesem Fall wenigstens ein Alkali- oder Ammoniumsalz eines Alkylphenolpolyglykoletherphosphats, Alkylphenolpolyglykoletherphosphonats, Fettalkoholpolyglykoletherphosphats, Fettalkoholpolyglykoletherphosphonats Alkylphenolpolyglykolethersulfats und/oder Fettalkoholpolyglykolethersulfats.

Gegebenenfalls können die Silan- und Thioallophanatstrukturen aufweisenden Polyisocyanate (G) auch mit hydrophil-modifizierten Polyisocyanaten auf Basis sonstiger, von (G) verschiedener Polyisocyanate, beispielsweise solchen auf Basis oligomerer Polyisocyanate des PDI, HDI, IPDI und/oder H₁₂-MDI mit Uretdion-, Isocyanurat-, Allophanat-, Biuret-, Iminooxadiazindion- und/oder Oxadiazintrionstruktur oder beliebigen Gemischen solcher oligomeren Polyisocyanate, zu hydrophil-modifizierten Silan- und Thioallophanatstrukturen aufweisenden Polyisocyanaten (II) abgemischt werden. In solchen Mischungen übernehmen die hydrophil modifizierten oligomeren Polyisocyanate, die nach einem der vorstehenden Verfahren erhältlich sind und die vorstehend genannten Emulgatortypen (N1) bis (N5) enthalten können, die Funktion eines Emulgators für den zugemischten Anteil an nichthydrophilen Silan- und Thioallophanatstrukturen aufweisenden Polyisocyanate (G).

Unabhängig von der Art des Emulgators (N) und dessen Herstellung wird dessen Menge bzw. die Menge der bei einer in situ-Herstellung des Emulgators den Polyisocyanaten (G) zugesetzten ionischen und/oder nichtionischen Komponenten im allgemeinen so bemessen, dass die letztlich erhaltenen hydrophil-modifizierten Silan- und Thioallophanatstrukturen aufweisenden Polyisocyanate (II) eine die Dispergierbarkeit des Polyisocyanatgemisches gewährleistenden Menge an Emulgator (N) enthalten.

Die Herstellung der aus Silan- und Thioallophanatstrukturen aufweisenden Polyisocyanaten (G) sowie mindestens einem ionischen und/oder nichtionischen Emulgator (N) bestehenden hydrophil-modifizierten Silan- und Thioallophanatstrukturen aufweisenden Polyisocyanate (II) kann lösemittelfrei oder gegebenenfalls in einem geeigneten, gegenüber Isocyanatgruppen inerten Lösemittel, beispielsweise den oben für die Thioallophanatisierung bei der Herstellung der Polyisocyanatkomponente (G) als geeignet beschriebenen, erfolgen. Die erfindungsgemäßen zweikomponentigen Polyurethandispersionsklebstoffe enthalten bevorzugt 70 bis 99 Gew.-% der Polyurethanpolyharnstoff-dispersion (I) und 1 bis 30 Gew.-% des hydrophil-modifizierten Silan- und Thioallophanatstrukturen aufweisenden Polyisocyanats (II) als Vernetzerkomponente (II). Besonders bevorzugte Polyurethandispersionsklebstoffe enthalten 80 bis 97 Gew.-% der Polyurethanpolyharnstoffdispersion (I) und 3 bis 20 Gew.-% des hydrophil-modifizierten Silangruppen-enthaltenen Polyisocyanats (II). Ganz besonders bevorzugte Polyurethandispersionsklebstoffe enthalten 85 bis 95 Gew.-% der Polyurethanpolyharnstoffdispersion (I) und 5 bis 15 Gew.-% hydrophil-modifiziertes Silan- und Thioallophanatstrukturen aufweisenden Polyisocyanats (II).

Die Dispersionsklebstoffe können durch einfaches Mischen der Komponenten (I) und (II) hergestellt werden. Bevorzugt wird die Polyurethanpolyharnstoffdispersion (I) vorgelegt und das hydrophil-modifizierte Silan- und Thioallophanatstrukturen aufweisende Polyisocyanat (II) unter Rühren zugegeben.

Um das Vermischen der Komponenten (I) und (II) zu erleichtern, kann das hydrophil-modifizierte Silan- und Thioallophanatstrukturen aufweisende Polyisocyanat (II) vor Zugabe zur Polyurethanpolyharnstoffdispersion (I) gegebenenfalls auch mit Wasser vordispergiert werden.

Die erfindungsgemäßen Dispersionsklebstoffe können alleine oder mit den in der Beschichtungs- und Klebstofftechnologie bekannten Bindemitteln, Hilfsstoffen und Zugschlagstoffen, insbesondere Emulgatoren und Lichtschutzmitteln, wie UV-Absorbern und sterisch gehinderte Aminen (HALS), Antioxidantien, Füllstoffen und weiteren Hilfsmitteln, z. B. Antiabsetzmitteln, Entschäumungs- und/oder Netzmitteln, Verlaufmitteln, Reaktivverdünnern, Weichmachern, Katalysatoren, Hilfslösemitteln und/oder Verdickern und Additiven, wie beispielsweise Pigmenten, Farbstoffen oder Mattierungsmitteln, eingesetzt werden. Auch Klebrigmacher ("Tackifier") können gegebenenfalls zugegeben werden.

Diese Bindemittel, Hilfsstoffe und Zugschlagstoffe können den erfindungsgemäßen Dispersionsklebstoffen unmittelbar vor der Verarbeitung zugegeben werden. Es ist aber auch möglich, zumindest einen Teil dieser Stoffe vor oder während der Dispergierung des Bindemittels zuzugeben.

Die Auswahl und die Dosierung dieser Stoffe, die den Einzelkomponenten und/oder der Gesamtmischung zugegeben werden können, sind dem Fachmann prinzipiell bekannt und können ohne ungebührlich hohen Aufwand auf den speziellen Anwendungsfall zugeschnitten und durch einfache Vorversuche ermittelt werden.

Die erfindungsgemäßen zweikomponentigen Polyurethandispersionsklebstoffe, die aus mindestens einer wässrigen Polyurethanpolyharnstoffdispersion (I) und mindestens einem hydrophil-modifizierten Silan- und Thioallophanatstrukturen aufweisenden Polyisocyanat (II) als Vernetzerkomponente bestehen, eignen sich hervorragend zur Verklebung unterschiedlicher Materialien, wie z. B. Holz, Metall, Kunststoff, Papier, Textil, Keramik, Glas oder Stein.

Besonders geeignet sind die erfindungsgemäßen Polyurethandispersionsklebstoffe zur Verklebung unterschiedlicher Materialien bei der Herstellung von Mehrschichtverbunden, insbesondere von Mehrschichtverbunden mit mindesten einer Metallfolie, wie sie beispielsweise zur Verpackung von Lebensmitteln eingesetzt werden. Sie führen dabei zu hoher Wärmebeständigkeit der Verklebung und hohen Verbundfestigkeiten, die unter den Bedingungen einer Heißsterilisation nicht nur erhalten bleiben sondern sich sogar noch einmal deutlich verbessern.

### Beispiele:

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909:2007-05.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate von 250 s-1.

Die Restmonomerengehalte wurden nach DIN EN ISO 10283:2007-11 gaschromatographisch mit internem Standard gemessen.

Die Gehalte (mol-%) der im Silan- und Thioallophanatstrukturen aufweisendes Polyisocyanat (G) enthaltenen Thiourethan, Thioallophanat und Isocyanurat wurden aus den Integralen protokonenentkoppelter ¹³C-NMR-Spektren (aufgenommen an einem Gerät Bruker DPX-400) errechnet und beziehen sich jeweils auf die Summe an vorliegenden Thiourethan-, Thioallophanat- und Isocyanuratgruppen. Die einzelnen Strukturelemente weisen gemessen in CDCl₃ folgende chemische Verschiebungen (in ppm) auf: Thiourethan: 166.8; Thioallophanat: 172.3 und 152.8; Isocyanurat: 148.4.

Die Bestimmung der nicht-flüchtigen Anteile in den wässrigen Polyurethandispersionen erfolgte nach DIN EN ISO 3251:2003-07, wobei die Bedingungen bei der Untersuchung mit folgenden Parametern festgelegt sind: 0,5 g/120 min/125 °C.

Die Verbundfestigkeit wurde mit einem Universalprüfgerät der Fa. FRANK-PTI GmbH (DE) bestimmt. Dazu wurden die Prüfkörper in die Klemmbacken der Zugprüfmaschine so eingespannt, dass das Canvas-Gewebe von der Aluminiumplatte im 180° Winkel abgezogen werden konnte. Die Aluminiumplatte wurde in die obere Klemmbacke und das Ende des überstehenden Canvas-Gewebe-Streifens in die untere Klemmbacke eingespannt. Die Zugprüfung wurde mit der Abzugsgeschwindigkeit 100 mm/min durchgeführt.

### Einsatzstoffe:

### Polyisocyanate

### Polyisocyanat 1

Silan- und Thioallophanatstrukturen aufweisendes Polyisocyanat (G) 756 g (4,5 mol) Hexamethylendiisocyanat (HDI) wurden bei einer Temperatur von 80°C unter trockenem Stickstoff und Rühren vorgelegt und mit 0,1 g Zink-(II)-2-ethyl-1-hexanoat als Katalysator versetzt. Über einen Zeitraum von ca. 30 min wurden 294 g (1,5 mol) Mercaptopropyltrimethoxysilan zugetropft, wobei die Temperatur der Mischung aufgrund der exotherm einsetzenden Reaktion bis auf 85°C anstieg. Das Reaktionsgemisch wurde weiter bei 85°C gerührt bis der NCO-Gehalt nach ca. 2 h auf 24,0 % abgesunken war. Der Katalysator wurde durch Zugabe von 0,1 g ortho-Phosphorsäure deaktiviert und das nicht umgesetzte monomere HDI bei einer Temperatur von 130°C und einem Druck von 0,1 mbar im Dünnschichtverdampfer abgetrennt.

Man erhielt 523 g eines praktisch farblosen klaren Silan- und Thioallophanatstrukturen aufweisenden Polyisocyanats, das folgende Kenndaten und Zusammensetzung aufwies:

| | |
|---|---|
| NCO-Gehalt: | 11,8 % |
| monomeres HDI: | 0,06 % |
| Viskosität (23°C): | 450 mPas |
| Thiourethan: | 0,0 mol-% |
| Thioallophanat: | 99,0 mol-% |
| Isocyanuratgruppen: | 1,0 mol-% |

### Polyisocyanat 2

### Hydrophiles HDI-Polyisocyanat gemäß EP-B 0 540 985, Emulgatortyp (N1)

870 g (4,50 val) eines Isocyanuratgruppen-haltigen Polyisocyanates auf Basis von HDI mit einem NCO-Gehalt von 21,7 %, einem Gehalt an monomerem HDI von 0,1 % und einer Viskosität von 3000 mPas (23 °C) wurden bei 100 °C unter trockenem Stickstoff und Rühren vorgelegt, innerhalb von 30 min mit 130 g (0,37 val) eines auf Methanol gestarteten, monofunktionellen Polyethylenoxidpolyethers eines mittleren Molekulargewichtes von 350 versetzt und bei dieser Temperatur weiter gerührt, bis der NCO-Gehalt der Mischung nach etwa 2 h auf einen Wert von 17,4 % gefallen war. Nach Abkühlen auf Raumtemperatur lag ein farbloses, klares Polyisocyanatgemisch mit folgenden Kenndaten vor:

| | |
|---|---|
| NCO-Gehalt: | 17,4% |
| monomeres HDI: | 0,08 % |
| Viskosität (23 °C): | 2800 mPas |

### Polyisocyanat 3

### Hydrophil-modifiziertes Silan- und Thioallophanatstrukturen aufweisendes Polyisocyanat (II)-3, Emulgatortyp (N1)

500 g (1,40 val) des Polyisocyanats 1 wurden bei 50 °C unter trockenem Stickstoff mit 500 g (2,07 val) des Polyisocyanats 2 gemischt und durch 30 minütiges Rühren homogenisiert. Nach Abkühlen auf Raumtemperatur lag ein farbloses, klares Polyisocyanatgemisch mit folgenden Kenndaten vor:

| | |
|---|---|
| NCO-Gehalt: | 14,6 % |
| monomeres HDI: | 0,08 % |
| Viskosität (23 °C): | 1560 mPas |

### Polyisocyanat 4

### Hydrophil-modifiziertes Silan- und Thioallophanatstrukturen aufweisendes Polyisocyanat (II)-1, Emulgatortyp (N1)

900 g (2,53 val) des Polyisocyanats 1 wurden bei 80 °C unter trockenem Stickstoff und Rühren vorgelegt, innerhalb von 30 min mit 100 g (0,20 val) eines auf Methanol gestarteten, monofunktionellen Polyethylenoxidpolyethers eines mittleren Molekulargewichtes von 500 versetzt und bei dieser Temperatur weiter gerührt, bis der NCO-Gehalt der Mischung nach etwa 4 h auf einen Wert von 17,4 % gefallen war. Nach Abkühlen auf Raumtemperatur lag ein farbloses, klares Polyisocyanatgemisch mit folgenden Kenndaten vor:

| | |
|---|---|
| NCO-Gehalt: | 9,8 % |
| monomeres HDI: | 0,05 % |
| Viskosität (23 °C): | 500 mPas |

### Polyisocyanat 5

### Hydrophil-modifiziertes Silan- und Thioallophanatstrukturen aufweisendes Polyisocyanat (II)-2, Emulgatortyp (N4)

980 g (2,53 val) des Polyisocyanats 1 wurden bei 80 °C unter trockenem Stickstoff und Rühren mit 20 g (0,09 val) 3-(Cyclohexylamino)-propansulfonsäure, 11,5 g (0,09 val) Dimethylcyclohexylamin und 0,2 g (200 ppm) 2,6-Di-tert-butyl-4-methylphenol (lonol) versetzt und bei dieser Temperatur weiter gerührt, bis der NCO-Gehalt der Mischung nach etwa 3 h auf einen Wert von 11,0 % gefallen war. Nach Abkühlen auf Raumtemperatur lag ein farbloses, klares Polyisocyanatgemisch mit folgenden Kenndaten vor:

| | |
|---|---|
| NCO-Gehalt: | 11,0 % |
| monomeres HDI: | 0,06 % |
| Viskosität (23 °C): | 640 mPas |

### Polyisocyanat 6

### Hydrophil-modifiziertes Silanstrukturen aufweisendes Polyisocyanat gemäß EP 1 544 226, Beispiel 2 (Vergleich 1)

690,3 g (3,58 val) Desmodur^{®} N 3400 (Polyisocyanat auf Basis von HDI, NCO-Gehalt: 21,8 %, Viskosität (23°C): 170 mPas; Hersteller: Covestro Deutschland AG) wurden bei 45 °C unter trockenem Stickstoff und Rühren vorgelegt, innerhalb von 20 min mit 122 g (0,22 val) eines auf Methanol gestarteten, monofunktionellen Polyethylenoxidpolyethers eines mittleren Molekulargewichtes von 550 versetzt und bei dieser Temperatur weiter gerührt, bis der NCO-Gehalt der Mischung nach etwa 6 h auf einen Wert von 17,3 % gefallen war. Anschließend wurden 171 g (0,49 val) eines nach Beispiel 1 der EP 1 544 226 hergestellten silanfunktionellen Aspartas (Additionsproduktes von 3-Aminopropyltrimethoxysilan an Maleinsäuerdiethylester) so zugegeben, dass die Temperatur des Reaktionsgemisches trotz der einsetzenden Exothermie 50°C nicht überstieg. Nach einer Reaktionszeit von 2 h bei 50°C und Abkühlen auf Raumtemperatur lag ein farbloses, klares Polyisocyanatgemisch mit folgenden Kenndaten vor:

| | |
|---|---|
| NCO-Gehalt: | 12,2 % |
| monomeres HDI: | 0,11 % |
| Viskosität (23 °C): | 680 mPas |

### Polyisocyanat 7

### Hydrophil-modifiziertes Silanstrukturen aufweisendes Polyisocyanat gemäß EP 953 585, Beispiel G (Vergleich 2)

855 g (4,68 val) eines isocyanuratgruppen enthaltenden Polyisocyanates auf Basis von HDI mit einem NCO-Gehalt von 23,0 % und einer Viskosität (23°C) von 1200 mPas wurden bei 70 °C unter trockenem Stickstoff und Rühren vorgelegt, innerhalb von 20 min mit 119 g (0,22 val) eines auf Methanol gestarteten, monofunktionellen Polyethylenoxidpolyethers eines mittleren Molekulargewichtes von 550 und 26 g (0,13 val) Mercaptopropyltrimethoxysilan versetzt und anschließend 3 h bei 80°C weiter gerührt. Nach Abkühlen auf Raumtemperatur und Zugabe von 5 g γ-Glycidyloxypropyltrimethoxysilan lag ein farbloses, klares Polyisocyanatgemisch mit folgenden Kenndaten vor:

| | |
|---|---|
| NCO-Gehalt: | 17,2 % |
| monomeres HDI: | 0,08 % |
| Viskosität (23 °C): | 770 mPas |

### Polyurethan-Polyharnstoff-Dispersionen

| | |
|---|---|
| Dispercoll U 42: | Wässrige Dispersion eines amorphen anionisch modifizierten Polyurethans auf Basis Polyesterpolol; nichtflüchtiger Anteil 50% (Covestro Deutschland AG, Leverkusen; DE) |
| Dispercoll U XP 2643: | Wässrige Dispersion eines amorphen anionisch modifizieren Polyurethans auf Basis Polyether; nichtflüchtiger Anteil 40% (Covestro Deutschland AG, Leverkusen; DE) |
| Dispercoll U 2682: | Wässrige Dispersion eines teilkristallinen anionisch modifizieren Polyurethans auf Basis Polyesterpolol; nichtflüchtiger Anteil 50% (Covestro Deutschland AG, Leverkusen; DE) |
| Dispercoll U 2824: | Wässrige Dispersion eines teilkristallinen anionisch modifizieren Polyurethans auf Basis Polyesterpolol; nichtflüchtiger Anteil 40% (Covestro Deutschland AG, Leverkusen; DE) |

### Herstellung der Klebstoffdispersionen

Die Polyurethan-Polyharnstoff-Dispersionen wurde in einem Behältnis vorgelegt. Das vernetzende Polyisocyanat, oder auch Polyisocyanatgemisch wurde anschließend unter Rühren der Polyurethan-Polyharnstoff-Dispersionen zugegeben. Das Polyisocyanat oder auch Polyisocyanatgemisch kann optional in einem vorgezogenen Schritt mit Wasser z.B. im Verhältnis 1:1 vordispergiert werden.

### Herstellung der Klebeverbindungen:

Die Klebstoffdispersionen wurden mit einem Pinsel auf Aluminiumplatten (B x T x H = 50 mm x 120 mm x 1,7 mm) und auf Canvas-Gewebe-Streifen (30 mm x 240 mm) aufgetragen. Anschließend wurden die mit Klebstoffdispersion beschichteten Canvas-Gewebe-Streifen in die Dispersionsschicht auf der Aluminiumplatte so eingelegt, dass die Canvas-Gewebe-Streifen 120 mm über der Aluminiumplatte hinausragten. Die Klebstoffdispersionsschicht wurde getrocknet, wobei das Wasser durch das Canvas-Gewebe verdampfte. Die Trocknung erfolgte bei 23°C / 50% rel. Feuchte.

Nach einer einwöchigen Lagerung bei Normklima wurde jeweils eine Hälfte der Klebeverbunde (pro Klebstoffdispersion) in einem Sterilisator Varioklav VI 400 EC (Fa. HP Labortechnik GmbH, Oberschleißheim, DE) bei 121°C über 30 min gemäß der Betriebsanleitung sterilisiert. Nach Entnahme aus dem Sterilisator wurden die Proben bei 23°C / 50% rel. Feuchte über 24 Std. getrocknet.

Anschließend erfolgte die Prüfung der Klebeverbunde auf Verbundfestigkeit. Die nachfolgende Tabelle zeigt die Zusammensetzungen der Dispersionsklebstoffe in Gew.-Teilen und die Verbundfestigkeiten der Klebeverbunde vor und nach der Dampfsterilisierung jeweils als Mittelwert aus fünf Einzelmessungen.

**Tabelle 1:**

| | 1 (Vergleich) | 2 | 3 | 4 | 5 (Vergleich) | 6 (Vergleich) | 7 | 8 | 9 (Vergleich) | 10 (Vergleich) |
|---|---|---|---|---|---|---|---|---|---|---|
| Dispercoll U 42 (amorph) | 100 | 100 | 100 | 100 | | | | | | |
| Dispercoll U XP 2643 (amorph) | | | | | | | 100 | 100 | 100 | 100 |
| Dispercoll U XP 2682 (teilkristalin) | | | | | 100 | | | | | |
| Dispercoll U XP 2824 (teilkristallin) | | | | | | 100 | | | | |
| Polyisocyanat 1 | | | | | | | | | | |
| Polyisocyanat 2 | 5 | | | | | | | | | |
| Polyisocyanat 3 | | 6 | | | 6 | 6 | 6 | | | |
| Polyisocyanat 4 | | | 6 | | | | | | | |
| Polyisocyanat 5 | | | | 6 | | | | 6 | | |
| Polyisocyanat 6 | | | | | | | | | 6 | |
| Polyisocyanat 7 | | | | | | | | | | 6 |
| Verbundfestigkeit vor Sterilisierung [N/mm] | 0,71 | 0,88 | 0,52 | 0,41 | 3,32 | 1,11 | 0,23 | 0,34 | 0,20 | 0,24 |
| Verbundfestigkeit nach Sterilisierung [N/mm] | 0,49 | 1,34 | 0,55 | 0,66 | 0,89 | 0,62 | 3,43 | 1,53 | 0,18 | 0,33 |
| Änderung Verbundfestigkeit [%] | -31 | 52 | 6 | 61 | -73 | -44 | 1391 | 350 | -10 | 38 |

Der Vergleich der Beispiele 1 bis 4 zeigt, dass sich die Verbundfestigkeiten von Klebeverbunden, die unter Verwendung der erfindungsgemäßen Dispersionsklebstoffe 2 bis 4, die als Vernetzerkomponenten hydrophil-modifizierte Silan- und Thioallophanatstrukturen aufweisende Polyisocyanate (II) enthalten, hergestellt wurden, unter Sterilisationsbedingungen zum Teil deutlich erhöht, während die Festigkeit eines Klebeverbunds auf Basis der gleichen Klebstoffdispersion, die mit dem silangruppenfreien hydrophilen HDI-Polyisocyanats gemäß EP-B 0 540 985 unter gleichen Bedingungen deutlich abnimmt.

Vergleichsbeispiele 5 und 6 zeigen, dass bei Verwendung teilkristalliner Polyurethandispersionen keine Verbesserung der Verbundfestigkeit durch die Sterilisation eintritt.

Der Vergleich der Beispiele 7 bis 10 zeigt, dass unter Verwendung hydrophil-modifizierter Silan- und Thioallophanatstrukturen aufweisender Polyisocyanate (II) unter Sterilisationsbedingungen eine erhebliche Erhöhung der Verbundfestigkeit eintritt (erfindungsgemäße Beispiel 7 und 8), während die Verwendung der hydrophil-modifizierten Silanstrukturen aufweisenden Polyisocyanate des Standes der Technik in Kombination mit der gleichen amorphen Polyurethandispersion nur zu einer sehr geringen Zunahme bzw. zu einer Abnahme der Festigkeit führt (Vergleichsbeispiele 9 und 10).

## Patentansprüche

1. Zweikomponentige Polyurethandispersionsklebstoffe umfassend
(I) mindestens eine wässrige Dispersion enthaltend ein amorphes Polyurethan-Polyharnstoff-Polymer und
(II) mindestens ein hydrophil-modifiziertes, Silan- und Thioallophanatstrukturen aufweisendes Polyisocyanat als Vernetzerkomponente.

2. Zweikomponentige Polyurethandispersionsklebstoffe gemäß Anspruch 1, **dadurch gekennzeichnet, dass** das Polyurethan-Polyharnstoff-Polymer der wässrigen Dispersion (I) als Aufbaukomponenten
(A) wenigstens ein amorphes Polyesterpolyol mit einem zahlenmittleren Molekulargewicht von mindestens 500 g/mol,
(B) wenigstens eine Di- und/oder eine Polyisocyanatkomponente,
(C) wenigstens eine Verbindung ausgewählt aus der Gruppe bestehend aus ein- bis dreiwertigen Alkoholen, welche zusätzlich mindestens eine ionische Gruppe und/oder mindestens eine in eine ionische Gruppe überführbare Gruppe enthalten, Monoaminocarbonsäuren, Diaminocarbonsäuren und beliebige Mischungen der vorgenannten,
(D) gegebenenfalls wenigstens eine Verbindung ausgewählt aus der Gruppe bestehend aus Neutralisationsaminen, Ammoniak und beliebigen Mischungen der vorgenannten,
(E) gegebenenfalls wenigstens ein Diamin und
(F) gegebenenfalls sonstige Verbindungen, die gegenüber Isocyanatgruppen reaktiv sind,
enthalten.

3. Zweikomponentige Polyurethandispersionsklebstoffe gemäß Anspruch 1 oder 2, **dadurch gekennzeichnet, dass** das Polyurethan-Polyharnstoff-Polymer der wässrigen Dispersion (I) als Aufbaukomponente
(A) wenigstens ein amorphes Polyesterpolyol in einer Menge von mehr als 20 Gew.-%, bezogen auf das Polyurethan-Polyharnstoff-Polymer enthält.

4. Zweikomponentige Polyurethandispersionsklebstoffe gemäß einem der Ansprüche 1 bis 3, **dadurch gekennzeichnet, dass** die Vernetzerkomponente (II) mindestens ein hydrophil-modifiziertes, Silan- und Thioallophanatstrukturen aufweisendes Polyisocyanat, bestehend aus mindestens einem Silan- und Thioallophanatstrukturen aufweisenden Polyisocyanat (G) sowie mindestens einem ionischen und/oder nichtionischen Emulgator (N), enthält.

5. Zweikomponentige Polyurethandispersionsklebstoffe gemäß Anspruch 4, **dadurch gekennzeichnet, dass** das Silan- und Thioallophanatstrukturen aufweisenden Polyisocyanat (G) die allgemeine Formel (III) hat, 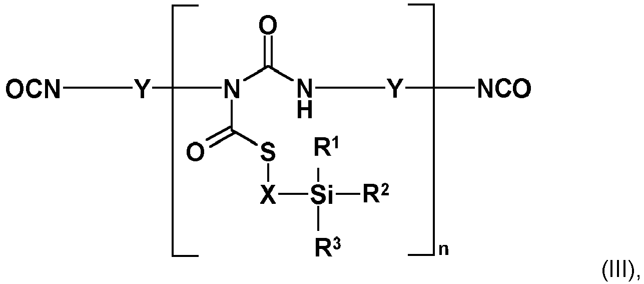 in welcher
R¹, R² und R³ für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
X für einen linearen oder verzweigten organischen Rest mit mindestens 2 Kohlenstoffatomen steht,
Y einen linearen oder verzweigten, aliphatischen oder cycloaliphatischen, einen araliphatischen oder aromatischen Rest mit bis zu 18 Kohlenstoffatomen bedeutet und
n für eine ganze Zahl von 1 bis 20 steht.

6. Zweikomponentige Polyurethandispersionsklebstoffe gemäß Anspruch 4 oder 5, **dadurch gekennzeichnet, dass** das hydrophil-modifizierte, Silan- und Thioallophanatstrukturen aufweisende Polyisocyanat der Vernetzerkomponente (II) dadurch hergestellt wird, dass die Silan- und Thioallophanatstrukturen aufweisenden Polyisocyanate (G) mit der Emulgatorkomponente (N) vermischt werden oder dass die Emulgatorkomponente (N) durch anteilige Umsetzung von Polyisocyanatenmolekülen der Polyisocyanatkomponente (G) mit ionischen und/oder nichtionischen Verbindungen, die gegenüber Isocyanatgruppen reaktive Gruppen tragen, in der Polyisocyanatkomponente (G) gebildet wird.

7. Zweikomponentige Polyurethandispersionsklebstoffe gemäß einem der Ansprüche 4 bis 6, **dadurch gekennzeichnet, dass** die Emulgatorkomponente (N) wenigstens ein Umsetzungsprodukt aus mindestens einem Silan- und Thioallophanatstrukturen aufweisenden Polyisocyanat (G) mit einem hydrophilen Polyetheralkohol umfasst.

8. Zweikomponentige Polyurethandispersionsklebstoffe gemäß Anspruch 7, **dadurch gekennzeichnet, dass** der hydrophile Polyetheralkohol ein Polyethylenglycolmonomethyletheralkohol ist, der im statistischen Mittel 5 bis 50 und bevorzugt 5 bis 25 Ethylenoxideinheiten enthält.

9. Zweikomponentige Polyurethandispersionsklebstoffe gemäß einem der Ansprüche 4 bis 6, **dadurch gekennzeichnet, dass** die Emulgatorkomponente (N) wenigstens ein Umsetzungsprodukt aus mindestens einem Silan- und Thioallophanatstrukturen aufweisenden Polyisocyanat (G) mit mindestens einer Aminosulfonsäure umfasst.

10. Zweikomponentige Polyurethandispersionsklebstoffe gemäß Anspruch 9, **dadurch gekennzeichnet, dass** die Aminosulfonsäure 2-(Cyclohexylamino)-ethansulfonsäure, 3-(Cyclohexylamino)-propansulfonsäure und/oder 4-(Cyclohexylamino)-butansulfonsäure ist.

11. Zweikomponentige Polyurethandispersionsklebstoffe gemäß einem der Ansprüche 1 bis 6, **dadurch gekennzeichnet, dass** die Emulgatorkomponente (N) wenigstens ein Alkali- oder Ammoniumsalz eines Alkylphenolpolyglykoletherphosphats, Alkylphenolpolyglykoletherphosphonats, Fettalkoholpolyglykoletherphosphats, Fettalkoholpolyglykoletherphosphonats Alkylphenolpolyglykolethersulfats und/oder Fettalkoholpolyglykolethersulfats umfasst.

12. Zweikomponentige Polyurethandispersionsklebstoffe gemäß einem der Ansprüche 4 bis 6, **dadurch gekennzeichnet, dass** die hydrophil-modifizierten, Silan- und Thioallophanatstrukturen aufweisenden Polyisocyanate (II) durch Abmischen von Silan- und Thioallophanatstrukturen aufweisenden Polyisocyanate (G) mit hydrophil-modifizierten Polyisocyanaten auf Basis sonstiger, von (G) verschiedener Polyisocyanate hergestellt werden.

13. Zweikomponentige Polyurethandispersionsklebstoffe gemäß einem der Ansprüche 1 bis 12 enthaltend 70 bis 99 Gew.-% einer wässrigen Dispersion eines Polyurethanpolyharnstoff-Polymers (I) und 1 bis 30 Gew.-% eines hydrophil-modifizierten Silan- und Thioallophanatstrukturen aufweisenden Polyisocyanats (II) als Vernetzerkomponente.

14. Verwendung der zweikomponentigen Polyurethandispersionsklebstoffe gemäß einem der Ansprüche 1 bis 13 zur Herstellung von Mehrschichtverbunden, insbesondere Mehrschichtverbunden, die aus einem synthetischen Substrat und einem Substrat mit metallischer Oberfläche bestehen.

15. Mehrschichtverbunde, hergestellt oder erhalten durch Verwendung der zweikomponentigen Polyurethandispersionsklebstoffe gemäß einem der Ansprüche 1 bis 13.
